# EUROPÄISCHE PATENTSCHRIFT

(11) **EP 0 856 920 B1**
(45) Veröffentlichungstag und Bekanntmachung des Hinweises auf die Patenterteilung: **06.05.2004**
(21) Anmeldenummer: 97115592.4
(22) Anmeldetag: 09.09.1997
(51) Int. Cl.: H01R 24/00, B60D 1/64, H01R 24/02

(54) **Steckverbindung aus Stecker und Steckdose, vorzugsweise für die elektrische Versorgung von Kraftfahrzeuganhängern**
Electrical connector comprising plug and jack, preferably for electrical supply of vehicle trailers
Connecteur électrique comprenant fiche et douille, de préference pour alimentation électrique d'un remorque de véhicule

(30) Priorität: 29.01.1997 DE 29701458 U
(43) Veröffentlichungstag der Anmeldung: 05.08.1998
(73) Patentinhaber: S.u.M. Sicherheitsleiteinrichtungen und Montage GmbH & Co. KG, 33378 Rheda-Wiedenbrück (DE)
(72) Erfinder: Jürgens, Hans-Georg, 33378 Rheda-Wiedenbrück (DE)
(74) Vertreter: Stracke, Alexander, Dipl.-Ing.

(56) Entgegenhaltungen:
- EP-A- 0 176 677
- US-A- 5 302 141

## Beschreibung

Die Erfindung bezieht sich auf eine mehrpolige, lösbare Steckverbindung zum Übertragen von elektrischen Strömen, vorzugsweise zur Verwendung an Kraftfahrzeugen, mit einem Stecker und einer Steckdose, wobei die Steckdose mit einem mit Kontaktpolen ausgerüsteten Steckdoseneinsatz versehen ist, der von einem Steckerabschlussring übergreifbar ist, in dessen Innenraum die Kontaktpole des Steckers vorgesehen sind, und wobei die Steckdose und der Stecker mit einem mittigen Kontaktpol und auf zwei zum mittigen Kontaktpol konzentrischen Kreisen angeordneten Kontaktpolen in Form von Kontakthülsen und Kontaktstiften ausgestattet sind.

Eine in Rede stehende Steckverbindung ist aus der US - A 5 302 141 bekannt. Bei dieser Steckverbindung ist allerdings der Stecker mit den Kontakthülsen und sie Steckdose bzw. der Steckdoseneinsatz mit Kontaktstiften versehen. Bei einer solchen Ausführung ist es nachteilig, dass ein bekannter, siebenpoliger Stecker nicht umrüstbar ist, da für die Kontakte kein Raum mehr zur Verfügung steht.

Aus der EP 0 176 677 B1 ist eine mehrpolige, lösbare Steckverbindung bekannt, die als dreizehnpolige, lösbare Steckverbindung ausgebildet ist, und bei der die Kontaktpole eines Außenkreises des Steckers und die Kontaktpole des Außenkreises des Steckdoseneinsatzes als Flachkontakte bzw. als Kontaktzungen gestaltet sind. Diese Flachkontakte haben den Nachteil, dass die Berührung untereinander sehr minimal, z.B. 1mm bis 2 mm ist und sich eine unregelmäßige Stromübertragung ergibt. Außerdem wird an der Berührungsstelle zweier Kontaktfedern sehr viel Wärme entwickelt, so dass Temperaturen von 40° Grad und mehr entstehen können. In Frankreich, Benelux und England werden häufig Metallstecker benutzt. Hier besteht die Gefahr, dass es bei der Verwendung der Steckdose gemäß dem europäischen Patent aufgrund der Kontaktfedern zu Kurzschlüssen kommt, die auch dadurch entstehen können, dass Spritzwasser in den Stecker oder in die Steckdose eindringt.

Ausgehend von einer durch die US - A 5 302 141 vorbekannten Steckverbindung liegt der Erfindung die Aufgebe zugrunde, eine Steckverbindung der eingangs näher beschriebenen Art so auszubilden, dass eine genormte, siebenpolige Steckdose, sowie der Stecker bis auf 13 Anschlüsse erweitert werden kann, so dass auch eine Nachrüstung vorgenommen werden kann.

Die gestellte Aufgabe wird gelöst, indem die im Steckdoseneinsatz festegelegten Kontakthülsen des Außenkreises in einer zur Mantelfläche des Steckdoseneinsatzes geöffnete Längsausnehmung des Steckdoseneinsatzes angeordnet sind und einwenig aus dieser Längsausnehmung herausragen.

Die erfindungsgemäße Steckdose und der zugeordnete Stecker werden technisch so ausgelegt, dass die Übertragung höherer Ströme als nach DIN 1724 und eine Dichtigkeit gegen eindringendes Wasser erreicht werden. Sofern jemand einen alten Stecker nach DIN 1724 verwendet, kann er dies problemlos mit der erfindungsgemäßen Steckdose durchführen. Eine Kurzschlussgefahr besteht nicht, da die zusätzlichen auf dem Außenkreis liegenden sechs Kontakte nach außen hin geschützt sind. Die erfindungsgemäße Steckdose hat somit den Vorteil, dass weltweit alle siebenpoligen Stecker verwendet werden können, und zwar ohne einen Adapter. Er hat ferner den Vorteil, dass ein bis zu dreizehnpoliger Stecker verwendet werden kann, und dieser Stecker auch selber nachrüstbar ist.

Mit den Kontaktstiften und Kontakthülsen des Außenkreises des Steckers bzw. des Außenkreises des Steckdoseneinsatzes können Stromstärken Übertragen werden, die oberhalb der von der Norm geforderten Stromstärke von 25 Ampere liegen.

In weiterer Ausgestaltung ist vorgesehen, dass die Kontakthülsen der Steckdose jeweils in einer Ausnehmung des Steckdoseneinsatzes angeordnet und radial nach Außen durch Isoliermasse abgedeckt sind. Diese Isoliermasse ist zweckmäßigerweise ein in die Ausnehmungen eingespritzter Kunststoff. Dadurch ist eine Kurzschlussgefahr bei Verwendung von Alusteckern ausgeschlossen. Ferner ist bei einer vorteilhaften Ausführungsform vorgesehen, dass die Kontaktstifte des Außenkreises des Steckers einen Durchmesser von 2, 5 mm und die Kontakthülsen des Außenkreises des Steckdoseneinsatzes einen Innendurchmesser von 2,5 mm und einen Außendurchmesser von 4 mm aufweisen, während die entsprechenden Durchmesser der übrigen Kontaktpole im Bereich von 5 mm bis 7 mm liegen.

Weitere Merkmale der Erfindung ergeben sich aus den Unteransprüchen.

Ausführungsbeispiele der Erfindung sind in den Zeichnungen dargestellt und werden im folgenden beschrieben. Es zeigen:
- Figur 1: eine Steckdose in Vorderansicht,
- Figur 2: eine gegenüber der Fig. 1 abgewandelte Ausführungsform der Steckdose,
- Figur 3: in vergrößertem Maßstab den strickpunktiert in Fig. 2 begrenzten Bereich III,
- Figur 4: einen den Steckdosen nach den Fig. 1 und 2 zugeordneten Stecker in Vorderansicht,
- Figur 5: eine Steckdose im Schnitt nach der Linie V-V in Fig. 1 mit eingesetztem Stecker, der nach der Linie Va-Va in Fig. 4 geschnitten ist,
- Figur 6: eine Ausschnittsvergrößerung aus der Fig. 5 und
- Figur 7: eine Abwandlungsform zu der in Fig. 6 aufgezeigten Konstruktion,
- Figur 8: eine weitere Ausführungsform der Steckdose,
- Figur 9: eine Ansicht der Steckdose in Richtung des Pfeiles IX in Fig. 8 bei aufgeklapptem Deckel und
- Figur 10: einen Schnitt nach der Linie X-X in Fig. 9.

Die Steckverbindung nach der Erfindung setzt sich aus einem Stecker 1 und einer Steckdose 2 zusammen. Der Stecker 1 weist ein Gehäuse 2a auf, in das vorzugsweise ein zum Fahrzeuganhänger führendes Kabel eingeführt und mit Anschlußklemmen 3 verbunden wird. Der vordere Teil des Gehäuses wird durch einen Stekkerabschlußring 4 gebildet. Dieser Steckerabschlußring 4 umschließt die Kontaktpole des Steckers, die als Kontakthülsen und als Kontaktstifte ausgebildet sind.

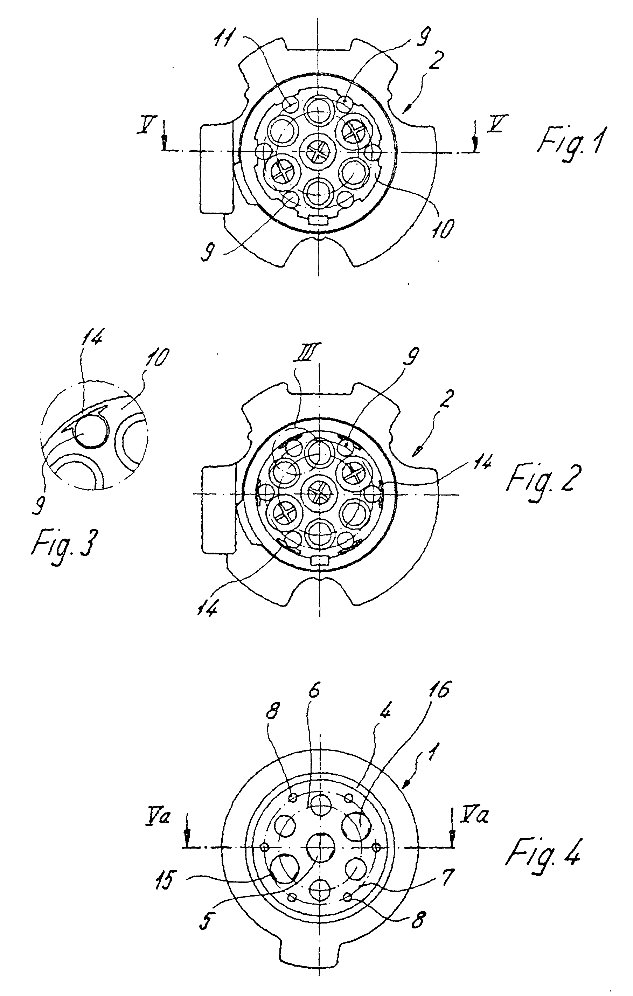

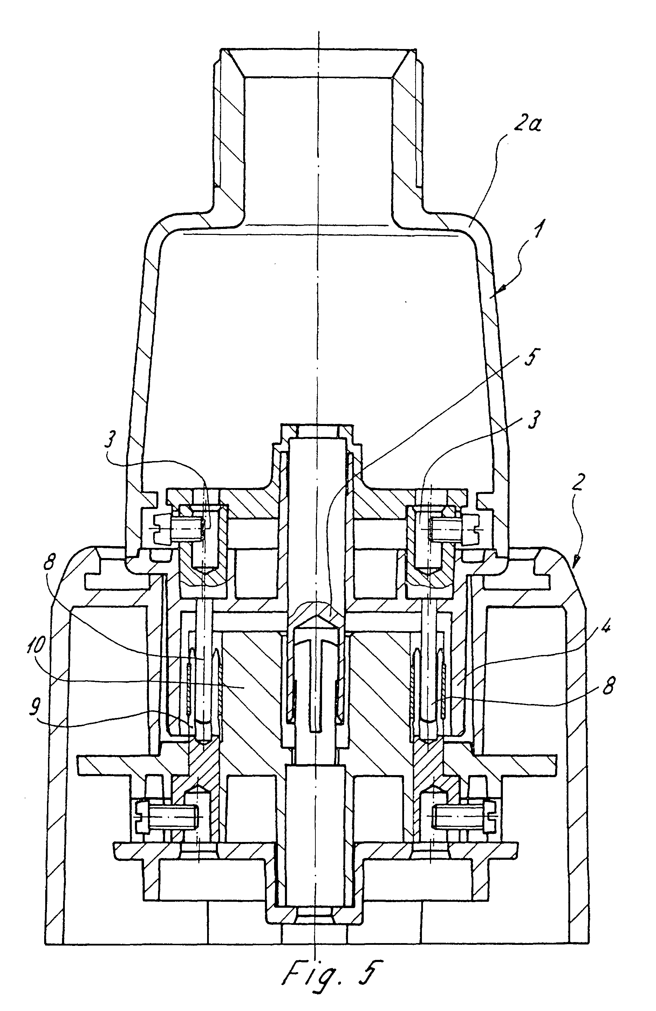

Aus den Fig. 4 und 5 ergibt sich, daß der Stecker einen mittigen Kontaktpol aufweist, der als Kontakthülse 5 gestaltet ist. Die übrigen Kontaktpole des Steckers sind auf zwei zur mittigen Kontakthülse angeordneten konzentrischen Kreisen, und zwar auf einem Innenkreis 6 und auf einem Außenkreis 7 vorgesehen.

Die Kontaktpole des Außenkreises 7 des Steckers 1 sind als Kontaktstifte 8 ausgebildet, die in Kontakthülsen 9 der Steckdose 2 eingreifen. Diese Kontakthülsen 9 sind in einem Steckdoseneinsatz 10 wie auch die übrigen Kontaktpole der Steckdose 2 und liegen auf einem Außenkreis 11 des Steckdoseneinsatzes.

Die Kontaktstifte 8 sowie die Kontakthülsen 9 weisen einen kleineren Außendurchmesser auf als die übrigen ebenfalls als Kontaktstifte und Kontakthülsen gestalteten Kontaktpole des Steckers und der Steckdose.

Bei dem Ausführungsbeispiel nach der Fig. 1 und nach den Fig. 5 und 6 sind die im Steckdoseneinsatz 10 festgelegten Kontakthülsen 9 des Außenkreises 11 der Steckdose 2 in einer zur Mantelfläche 12 des Steckdoseneinsatzes 10 geöffneten Längsausnehmung 13 angeordnet, aus der die Kontakthülse 9 ein wenig in den Raum zwischen dem Steckdoseneinsatz 10 und dem Steckerabschlußring 4 ragt.

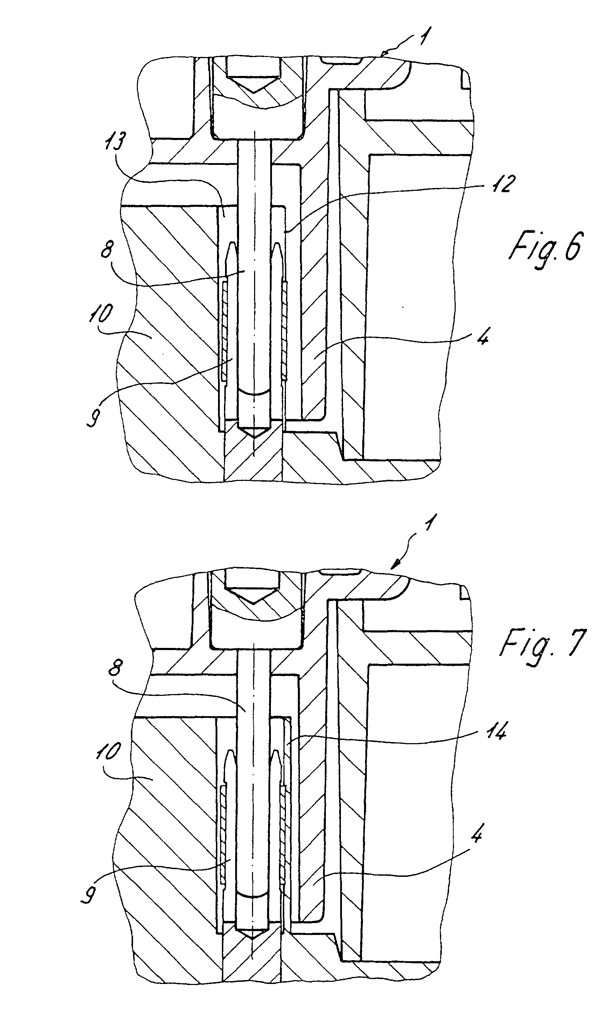

Bei dem Ausführungsbeispiel nach den Fig. 2, 3 und 7 sind die in den Ausnehmungen 13 des Steckdoseneinsatzes 10 angeordneten Kontakthülsen 9 durch eine Isoliermasse 14 nach außen abgedeckt. Als Isoliermasse 14 kann ein Kunststoff in die Ausnehmungen 13 eingespritzt werden.

Der Stecker 1 ist in dem dargestellten Ausführungsbeispiel nach der Fig. 4 mit einer mittigen Kontakthülse 5 und mit weiteren Kontakthülsen 15,16 versehen.

Die übrigen Kontaktpole sind als Kontaktstifte ausgebildet.

Die mit einem kleineren Durchmesser versehenen Kontaktstifte 8 des Außenkreises 7 des Steckers - im Vergleich zu den übrigen Kontaktstiften des Steckers - können z.B. einen Durchmesser von 2,5 mm aufweisen, während die in der Steckdose vorgesehenen, zugeordneten Kontakthülsen 9 einen Innendurchmesser von 2,5 mm und einen Außendurchmesser von 4 mm haben.

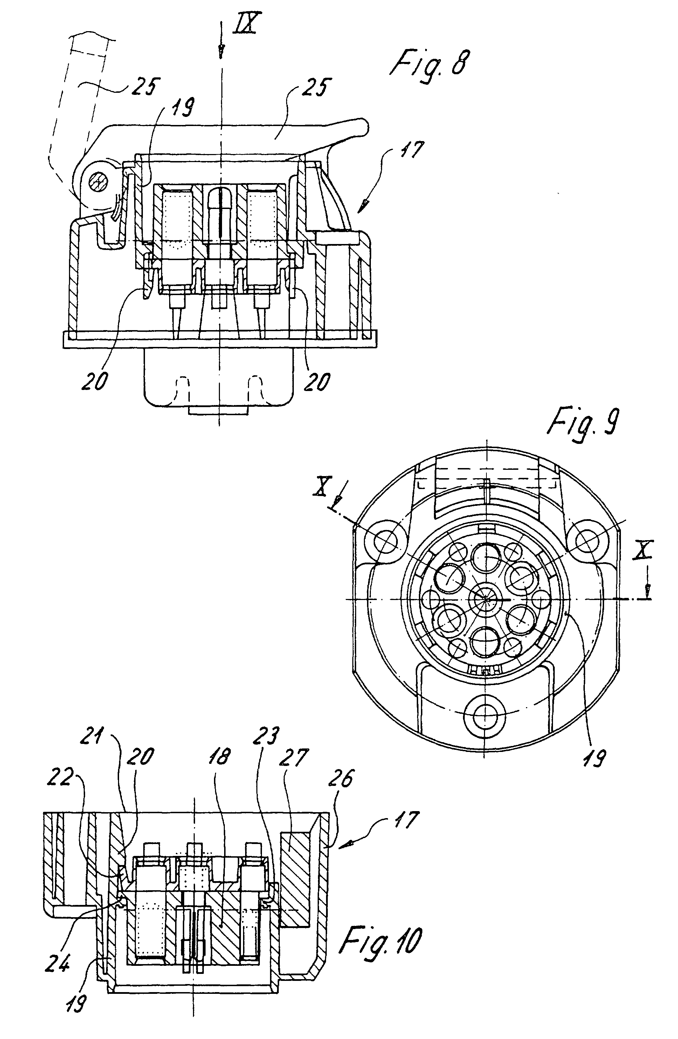

In den Fig. 8 bis 10 ist eine Steckdose 17 dargestellt, in der der mit Kontaktpolen versehene Steckdoseneinsatz 18 durch Schnappverbindungen im Steckdosengehäuse 19 festgelegt ist. Das Steckdosengehäuse 19 weist auf dem Umfang verteilt angeordnete Rasthaken 20 auf, die beim Einführen des Steckdoseneinsatzes 18 durch die rückseitige Öffnung 21 in der Endstellung der Montagebwegung von Rastzungen 22 des Steckdoseneinsatzes hintergriffen werden. Die Montageendstellung wird durch einen Anschlag 23 des Steckdosengehäuses 19 festgelegt, an dem sich eine Fläche 24 des Steckdoseneinsatzes abstützt.

Die vordere Öffnung der Steckdose ist in bekannter Weise durch einen federbelasteten Deckel 25 verschließbar.

In einer Kammer zwischen dem Steckdoseneinsatz 18 und dem Außenmantel 26 des Steckdosengehäuses wird ein Relais 27 angeordnet, durch das bei Anhängerbetrieb die Nebelschlußleuchte des Zugfahrzeuges selbsttätig abgeschaltet wird.

## Patentansprüche

1. Mehrpolige, lösbare Steckverbindung zum Übertragen von elektrischen Strömen, vorzugsweise zur Verwendung an Kraftfahrzeugen, mit einem Stecker (1) und einer Steckdose (2), wobei die Steckdose (2) mit einem mit Kontaktpolen ausgerüsteten Steckdoseneinsatz (10) versehen ist, der von einem Steckerabschlussring (4) übergreifbar ist, in dessen Innenraum die Kontaktpole (5) des Steckers (1) vorgesehen sind, und wobei die Steckdose (2) und der Stecker (1) mit einem mittigen Kontaktpol (5) und auf zwei zum mittigen Kontaktpol konzentrischen Kreisen (6, 7) angeordneten Kontaktpolen in Form von Kontakthülsen (15, 16) und Kontaktstiften (8) ausgestattet sind, **dadurch gekennzeichnet, dass** die im Steckdoseneinsatz (10) festegelegten Kontakthülsen (9) des Außenkreises (11) in einer zur Mantelfläche (12) des Steckdoseneinsatzes (10) geöffnete Längsausnehmung (13) des Steckdoseneinsatzes (10) angeordnet sind und einwenig aus dieser Längsausnehmung herausragen.

2. Mehrpolige, Lösbare Steckverbindung zum Übertragen von elektrischen Strömen nach Anspruch 1, **dadurch gekennzeichnet, dass** die Kontakthülsen (9) der Steckdose (2) jeweils in einer Ausnehmung des Steckdoseneinsatzes angeordnet sind und radial nach außen durch Isoliermasse (14) abgedeckt sind.

3. Mehrpolige, lösbare Steckverbindung zum Übertragen von elektrischen Strömen nach Anspruch 2, **dadurch gekennzeichnet, dass** die Isoliermasse (14) ein in die Ausnehmungen (13) eingespritzter Kunststoff ist.

4. Mehrpolige, lösbare Steckverbindung zum Übertragen von elektrischen Strömen nach Anspruch 1, **dadurch gekennzeichnet, dass** die Kontaktstifte (8) einen Durchmesser von 2,5 mm und die Kontakthülsen (9) einen Innendurchmesser von 2,5 mm und einen Außendurchmesser von 4 mm aufweisen und die Durchmesser der übrigen Kontaktpole im Bereich von 5 mm bis 7 mm liegen.

5. Mehrpolige, lösbare Steckverbindung zum Übertragen von elektrischen Strömen nach einem oder mehreren der vorhergehenden Ansprüche 1 bis 4, **dadurch gekennzeichnet, dass** der Steckdoseneinsatz (18) durch eine Schnappverbindung im Steckdosengehäuse (19) festegelegt ist.

6. Mehrpolige, lösbare Steckverbindung zum Übertragen von elektrischen Strömen nach Anspruch 5, **dadurch gekennzeichnet, dass** das Steckdosengehäuse (19) mit auf dem Umfang verteilt angeordneten Rasthaken (10) versehen ist, die von Rastzungen (22) des Steckdoseneinsatzes (18) hintergriffen sind.

7. Mehrpolige, lösbare Steckverbindung zum Übertragen von elektrischen Strömen nach Anspruch 5 oder 6, **dadurch gekennzeichnet, dass** das Steckdosengehäuse (19) einen die Montagenendstellung des Steckdoseneinsatzes bestimmenden Anschlag (23) aufweist, an dem sich eine Fläche (24) des Steckdoseneinsatzes (18) abstützt.

8. Mehrpolige, lösbare Steckverbindung zum Übertragen von elektrischen Strömen nach einem oder mehreren der vorhergehenden Ansprüche 1 bis 7, **dadurch gekennzeichnet, dass** in dem Innenraum der Steckdose (2) zwischen dem Steckdoseneinsatz und dem Außenmantel (26) ein Relais angeordnet ist, durch das bei Anhängerbetrieb die Nebelschlussleuchte des Zugfahrzeugs selbsttätig abschaltbar ist.

## Claims

1. Multipole, releasable plug-in connection for transmitting electrical currents, preferably for use in motor vehicles, having a plug (1) and a socket (2), the socket (2) being provided with a socket insert (10) which is fitted with contact poles and can be covered over by a plug closure ring (4) within which the contact poles (5) of the plug (1) are provided, and the socket (2) and the plug (1) being equipped with a central contact pole (5) and contact poles which are in the form of contact tubes (15, 16) and contact pins (8) and are arranged on two circles (6, 7) which are concentric with the central contact pole, **characterized in that** the contact tubes (9), fixed in the socket insert (10), of the outer circle (11) are arranged in an elongate recess (13), which is open towards the outer surface (12) of the socket insert (10), in the socket insert (10), and project slightly from this elongate recess.

2. Multipole, releasable plug-in connection for transmitting electrical currents according to Claim 1, **characterized in that** the contact tubes (9) of the socket (2) are each arranged in a recess in the socket insert and are covered radially outwards by insulating material (14).

3. Multipole, releasable plug-in connection for transmitting electrical currents according to Claim 2, **characterized in that** the insulating material (14) is a plastic injected into the recesses (13).

4. Multipole, releasable plug-in connection for transmitting electrical currents according to Claim 1, **characterized in that** the contact pins (8) have a diameter of 2.5 mm and the contact tubes (9) have an internal diameter of 2.5 mm and an external diameter of 4 mm, and the diameters of the remaining contact poles are in the range from 5 mm to 7 mm.

5. Multipole, releasable plug-in connection for transmitting electrical currents according to one or more of the preceding Claims 1 to 4, **characterized in that** the socket insert (18) is fixed in the socket housing (19) by means of a snap-fit connection.

6. Multipole, releasable plug-in connection for transmitting electrical currents according to Claim 5, **characterized in that** the socket housing (19) is provided with latching hooks (10) which are arranged such that they are distributed over the circumference and behind which engage latching tongues (22) of the socket insert (18).

7. Multipole, releasable plug-in connection for transmitting electrical currents according to Claim 5 or 6, **characterized in that** the socket housing (19) has a stop (23) which sets the final assembly position of the socket insert and on which a surface (24) of the socket insert (18) is supported.

8. Multipole, releasable plug-in connection for transmitting electrical currents according to one or more of the preceding Claims 1 to 7,
**characterized in that** within the socket, between the socket insert and the outer surface (26), is arranged a relay by means of which, with a trailer attached, the rear fog light of the towing vehicle can be switched off automatically.

## Revendications

1. Connexion à fiches multipolaire séparable pour transmettre des courants électriques, destinée à être utilisée de préférence sur des véhicules automobiles, comportant un connecteur (1) et une prise (2), la prise (2) étant pourvue d'un insert de prise (10) équipé de pôles de contact et sur lequel peut passer une bague de terminaison de connecteur (4) dans le volume intérieur de laquelle sont prévus les pôles de contact (5) du connecteur (1), et la prise (2) ainsi que le connecteur (1) étant équipés d'un pôle de contact central (5) et de pôles de contact disposés sur deux cercles (6, 7) concentriques au pôle de contact central, sous la forme de douilles de contact (15, 16) et de broches de contact (8), **caractérisée en ce que** les douilles de contact (9) du cercle extérieur (11), fixées dans l'insert de prise (10), sont disposées dans un évidement longitudinal (13) de l'insert de prise (10) qui est ouvert vers la surface d'enveloppe (12) de l'insert de prise (10), et dépassent légèrement de cet évidement longitudinal.

2. Connexion à fiches multipolaire séparable pour transmettre des courants électriques, selon la revendication 1, **caractérisée en ce que** les douilles de contact (9) de la prise (2) sont disposées chacune dans un évidement de l'insert de prise et sont recouvertes radialement vers l'extérieur par une masse isolante (14).

3. Connexion à fiches multipolaire séparable pour transmettre des courants électriques, selon la revendication 2, **caractérisée en ce que** la masse isolante (14) est une matière plastique injectée dans les évidements (13).

4. Connexion à fiches multipolaire séparable pour transmettre des courants électriques, selon la revendication 1, **caractérisée en ce que** les broches de contact (8) présentent un diamètre de 2,5 mm et les douilles de contact (9) un diamètre intérieur de 2,5 mm et un diamètre extérieur de 4 mm, et les diamètres des autres pôles de contact sont compris entre 5 mm et 7 mm.

5. Connexion à fiches multipolaire séparable pour transmettre des courants électriques, selon une ou plusieurs des revendications 1 à 4 précédentes, **caractérisée en ce que** l'insert de prise (18) est fixé par une liaison clipsée dans le boîtier de prise (19).

6. Connexion à fiches multipolaire séparable pour transmettre des courants électriques, selon la revendication 5, **caractérisée en ce que** le boîtier de prise (19) est pourvu de crocheta d'encliquetage (10) répartis sur le pourtour, derrière lesquels passent des languettes d'encliquetage (22) de l'insert de prise (18).

7. Connexion à fiches multipolaire séparable pour transmettre des courants électriques, selon la revendication 5 ou 6, **caractérisée en ce que** le bottier de prise (19) comporte une butée (23) déterminant la position finale de montage de l'insert de prise, contre laquelle prend appui une surface (24) de l'insert de prise (18).

8. Connexion à fiches multipolaire séparable pour transmettre des courants électriques, selon une ou plusieurs des revendications 1 à 7 précédentes, **caractérisé en ce que** dans le volume intérieur de la prise (2), entre l'insert de prise et l'enveloppe extérieure (26), est disposé un relais par lequel en cas de remorque attelée, les feux arrière de brouillard du véhicule tracteur peuvent être éteints automatiquement.
